(19) Europäisches Patentamt European Patent Office Office européen des brevets

(11) **EP 4 528 989 A1**

(12) **EUROPEAN PATENT APPLICATION**
published in accordance with Art. 153(4) EPC

(43) Date of publication:
26.03.2025 Bulletin 2025/13

(21) Application number: 23845100.9

(22) Date of filing: 06.06.2023

(51) International Patent Classification (IPC):
*H02K 1/278* (2022.01)      *H02K 1/28* (2006.01)

(52) Cooperative Patent Classification (CPC):
H02K 1/278; H02K 1/28

(86) International application number:
PCT/CN2023/098662

(87) International publication number:
WO 2024/021887 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.07.2022 CN 202210878269
25.07.2022 CN 202221923822 U

(71) Applicants:
• Anhui Welling Auto Parts Co., Ltd.
Hefei, Anhui 230031 (CN)
• Guangdong Welling Auto Parts Co., Ltd.
Foshan, Guangdong 528311 (CN)

(72) Inventors:
• WANG, Pan
Hefei, Anhui 230031 (CN)
• WANG, Fei
Hefei, Anhui 230031 (CN)

(74) Representative: Ran, Handong et al
Maucher Jenkins
Seventh Floor Offices
Artillery House
11-19 Artillery Row
London SW1P 1RT (GB)

(54) **ROTOR PUNCHING SHEET, ROTOR CORE, ROTOR, MOTOR AND VEHICLE**

(57) Provided in the present application are a rotor punching sheet, a rotor core, a rotor, a motor and a vehicle. The rotor punching sheet comprises a punching sheet main body; a shaft hole which is provided in the punching sheet main body; and a plurality of recess groups which are provided in the punching sheet main body and separately distributed around the shaft hole. Each recess group comprises a plurality of mounting recesses, a plurality of first auxiliary recesses and a plurality of second auxiliary recesses, each mounting recess comprises two recess bodies, each groove body comprises a permanent magnet recess section, and an end portion of each permanent magnet recess section away from the shaft hole is a matching portion. The plurality of mounting recesses are separately arranged in a radial direction of the punching sheet main body, mounting recesses closest to the shaft hole in the plurality of mounting recesses are first mounting recesses, and mounting recesses closest to an outer peripheral wall of the punching sheet main body in the plurality of mounting recesses are second mounting recesses. The first auxiliary recesses and the second auxiliary recesses are all arranged on an outer peripheral wall of the punching sheet main body, the first auxiliary recesses and the second auxiliary recesses are correspondingly arranged, and portions of the punching sheet main body between every two adjacent first mounting recesses and the second auxiliary recesses are correspondingly arranged.

FIG.1

## Description

This application claims priority to Chinese Patent Application No. 202210878269.4 filed with China National Intellectual Property Administration on July 25, 2022 and entitled "ROTOR PUNCHING SHEET, ROTOR CORE, ROTOR, MOTOR AND VEHICLE", and Chinese Patent Application No. 202221923822.3 filed with China National Intellectual Property Administration on July 25, 2022 and entitled "ROTOR PUNCHING SHEET, ROTOR CORE, ROTOR, MOTOR AND VEHICLE", which are incorporated herein by reference in their entirety.

## FIELD

The present application relates to the technical field of motors, and particularly relates to a rotor punching sheet, a rotor core, a rotor, a motor and a vehicle.

## BACKGROUND

With the increasing global warming and energy crisis, it has become an inevitable trend for new energy vehicles to replace existing fuel vehicles, and a built-in permanent magnet synchronous motor has become the first choice of driving motors for electric vehicles due to its characteristics such as high torque density, high power density and high efficiency. However, in related technologies, the built-in permanent magnet synchronous motor also has common problems such as large vibration noise.

## SUMMARY

The present application aims to solve at least one of the technical problems in the prior art or the related art.

Thus, the first aspect of the present application provides a rotor punching sheet.

The second aspect of the present application provides a rotor core.

The third aspect of the present application provides a rotor.

The fourth aspect of the present application provides a motor.

The fifth aspect of the present application provides a vehicle.

In view of this, the first aspect of the present application provides a rotor punching sheet, comprising: a punching sheet main body; a shaft hole, provided in the punching sheet main body; and a plurality of recess groups, provided in the punching sheet main body and separately distributed around the shaft hole, and each recess group comprises a plurality of mounting recesses, a plurality of first auxiliary recesses and a plurality of second auxiliary recesses, each mounting recess comprises two recess bodies, each recess body comprises a permanent magnet recess section, and an end portion of each permanent magnet recess section away from the shaft hole is a matching portion; the plurality of mounting recesses are separately arranged in a radial direction of the punching sheet main body, the mounting recesses in the plurality of mounting recesses closest to the shaft hole are first mounting recesses, and the mounting recesses in the plurality of mounting recesses closest to an outer peripheral wall of the punching sheet main body are second mounting recesses; the plurality of first auxiliary recesses and the plurality of second auxiliary recesses are all arranged on an outer peripheral wall of the punching sheet main body; the first auxiliary recesses and the second mounting recesses are correspondingly arranged; and the portion of the punching sheet main body between two adjacent first mounting recesses and the second auxiliary recess are correspondingly arranged; the connecting lines between the matching portions of the two recess bodies of the first mounting recess and the center of the shaft hole form a first polar arc angle θ1, and the connecting lines between the matching portions of the two recess bodies of the second mounting recess and the center of the shaft hole form a second polar arc angle θ2; the plurality of first auxiliary recesses are arranged separately along the circumferential direction of the punching sheet main body, the included angle between the connecting lines between the centers of the first auxiliary recesses in the plurality of first auxiliary recesses at the two end portions in the circumferential direction of the punching sheet main body and the center of the shaft hole is α1, the number of pole pairs of the motor is p, and

$$\frac{0.1 \times 360^\circ}{2 \times p} \le \alpha 1 \le 0.9 \times \theta 2;$$ the included angle between the connecting lines between the two end portions of the second auxiliary recess in the circumferential direction of the punching sheet main body and the center of the shaft hole is

$$0^\circ \le \alpha 2 \le 0.75 \times \left( \frac{360^\circ}{2 \times p} - \theta 1 \right)$$
α2, and .

The rotor punching sheet according to the present application can further have the following additional technical features.

In the above embodiment, furthermore, the plurality of first auxiliary recesses are symmetrically arranged along the centerline of a magnetic pole where they are located.

In any of the above embodiments, furthermore, the second auxiliary recesses are symmetrically arranged along the bisector of the magnetic pole.

In any of the above embodiments, furthermore, the number of the first auxiliary recesses is *2p,* and the number of the second auxiliary recesses is *p.*

In any of the above embodiments, furthermore, the recess depth of the first auxiliary recess is greater than or equal to 0.2mm and less than or equal to 1.2mm; and the recess depth of the second auxiliary recess is greater than or equal to 0.2mm and less than or equal to 1.2mm.

In any of the above embodiments, furthermore, each recess body further comprises a first end portion and a second end portion, and the permanent magnet recess section is connected between the first end portion and the second end portion; the first end portions of the two recess bodies of each mounting recess are arranged adjacent to each other, and the second end portions of the two recess bodies of each mounting recess are arranged away from each other; the width of the permanent magnet recess section of the first mounting recess is W1, the width of the permanent magnet recess section of the second mounting recess is W2; and 10°≤θ1-θ2≤22.5°, and $1.1 \leq \frac{W1}{W2} \leq 2.5$ .

In any of the above embodiments, furthermore, the first polar arc angle θ1 and the number *p* of the pole pairs of the motor satisfy $0.5 \times \frac{360^\circ}{2 \times p} \leq \theta1 \leq 0.85 \times \frac{360^\circ}{2 \times p}$ ; the second polar arc angle θ2 and the number *p* of the pole pairs of the motor satisfy $0.2 \times \frac{360^\circ}{2 \times p} \leq \theta2 \leq 0.5 \times \frac{360^\circ}{2 \times p}$ ; the width W1 of the permanent magnet recess section of the first mounting recess is greater than or equal to 2mm, and less than or equal to 6mm; the width W2 of the permanent magnet recess section of the second mounting recess is greater than or equal to 1mm, and less than or equal to 5mm.

In any of the above embodiments, furthermore, the first end portion of the recess body is closer to the shaft hole than the second end portion.

In any of the above embodiments, furthermore, the two permanent magnet recess sections of the first mounting recess and the two permanent magnet recess sections of the second mounting recess respectively comprise first end surfaces and second end surfaces in the radial direction of the punching sheet main body, and the first end surfaces are closer to the shaft hole than the second end surfaces; a first magnetic pole angle θ3 is formed between the two second end surfaces of the first mounting recess, and a second magnetic pole angle θ4 is formed between the two second end surfaces of the second mounting recess; and 0°≤θ4-θ3≤60°.

In any of the above embodiments, furthermore, the first magnetic pole angle θ3 is greater than or equal to 80°, and less than or equal to 130°; the second magnetic pole angle θ4 is greater than or equal to 90°, and less than or equal to 150°.

In any of the above embodiments, furthermore, along the circumferential direction of the shaft hole, both of the two ends of the second mounting recess comprise magnetic isolation holes, and a magnetic isolation bridge is formed between the magnetic isolation holes and the outer peripheral wall of the punching sheet main body; along a first direction, the minimum distance between the first auxiliary recess and the adjacent magnetic isolation bridge is d, the minimum distance between two magnetic isolation bridges at the end portions of the two ends of the second mounting recess is D, and d≤k×D, k ∈ [0.05,0.45], and *d* is greater than or equal to the thickness of the punching sheet main body.

In any of the above embodiments, furthermore, along an axial direction perpendicular to the shaft hole, the punching sheet main body is sectioned; in the cross section, the contour line of any of the first auxiliary recess and the second auxiliary recess comprises any one or the combination of an arc, a wave form line and a folding line.

In any of the above embodiments, furthermore, when the contour line of any of the first auxiliary recess and the second auxiliary recess comprises an arc, the radius of the arc of the first auxiliary recess is R1, the radius of the arc of the second auxiliary recess is R2, and 0.35≤R1/R2≤7.5.

The second aspect of the present application provides a rotor core, comprising: a plurality of the rotor punching sheets of any of the embodiments in the first aspect, and the plurality of rotor punching sheets are stacked; and the recess bodies of the plurality of rotor punching sheets are communicated along the axial direction of the punching sheet main body to form a plurality of inserting slots.

The third aspect of the present application provides a rotor, comprising: the rotor core of the second aspect; and a plurality of permanent magnets, and each inserting slot is arranged with a permanent magnet.

In the above embodiments, furthermore, there are a plurality of rotor cores, and the plurality of rotor cores are stacked along the axial direction of the shaft hole; there is a relative rotation angle between any two rotor cores, the plurality of rotor cores comprise a plurality of relative rotation angles, and the maximum value β of the plurality of relative rotation angles satisfies $\frac{0.5 \times 360^\circ \times (N-1)}{N \times Z} \leq \beta \leq \frac{1.1 \times 360^\circ \times (N-1)}{N \times Z}$ , and N is the number of the rotor cores, and Z is the number of the stator recesses of the motor.

The fourth aspect of the present application provides a motor, comprising the rotor of any of the embodiments in the third aspect.

The fifth aspect of the present application provides a vehicle, comprising the motor in the fourth aspect.

The additional aspects and advantages of the present application will be obvious in the following description, or can be understood through the implementation of the present application.

## BRIEF DESCRIPTION OF THE DRAWINGS

The above and/or additional aspects and advantages of the present application will be obvious and understood easily from the following description of the embodiments in combination with the accompanying drawings.

FIG. 1 is a schematic view of the structure of a rotor core according to an embodiment of the present application;
FIG. 2 is a schematic view of the structure of a rotor punching sheet according to an embodiment of the present application;
FIG. 3 is an enlarged view of part A of the rotor punching sheet as shown in FIG. 2;
FIG. 4 is a schematic view of the structure of a first portion of a rotor punching sheet according to an embodiment of the present application;
FIG. 5 is a schematic view of the structure of a second portion of a rotor punching sheet according to an embodiment of the present application;
FIG. 6 is a schematic view of the structure of a rotor according to an embodiment of the present application;
FIG. 7 are simulation curves of the average torque and torque ripple rate of a motor influenced by a rotor oblique pole angle according to an embodiment of the present application.

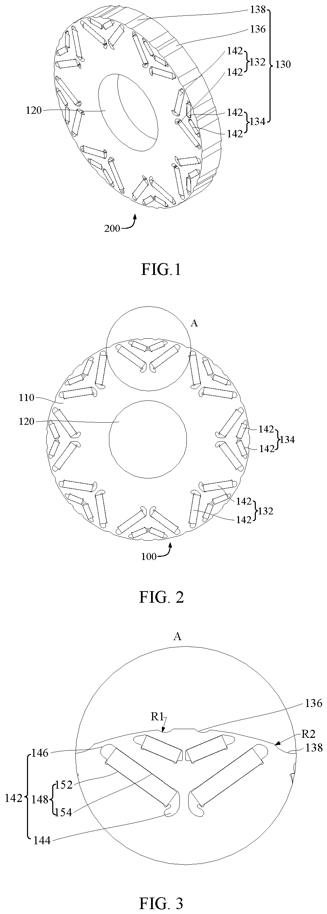

And the corresponding relationships between the reference signs and the component names in FIG. 1 to FIG. 6 are as follows:
100 rotor punching sheet, 110 punching sheet main body, 120 shaft hole, 122 center of the shaft hole, 130 recess group, 132 first mounting recess, 134 second mounting recess, 136 first auxiliary recess, 138 second auxiliary recess, 142 recess body, 144 first end portion, 146 second end portion, 148 permanent magnet recess section, 150 matching portion, 152 first end surface, 154 second end surface, 156 magnetic isolation hole, 158 magnetic isolation bridge, 200 rotor core, and 300 rotor.

## DETAILED DESCRIPTION OF THE APPLICATION

To more clearly understand the above purposes, features and advantages of the present application, the present application will be further detailed hereinafter in combination with the accompanying drawings and embodiments. It should be indicated that in the case of no conflict, the embodiments and the features in the embodiments of the present application can be combined with each other.

Many details are illustrated in the following description for the convenience of a thorough understanding to the present application, but the present application can also be implemented using other embodiments other than these described herein. Therefore, the protection scope of the present application is not limited to the embodiments disclosed in the following text.

A rotor punching sheet 100, a rotor core 200, a rotor, a motor and a vehicle according to some embodiments of the present application are described in the following by referring to FIG. 1 to FIG. 7.

As shown in FIG. 1 and FIG. 2, an embodiment according to the first aspect of the present application provides a rotor punching sheet 100, and the rotor punching sheet 100 comprises a punching sheet main body 110, a shaft hole 120 and a plurality of recess groups 130.

The shaft hole 120 is provided in the punching sheet main body 110.

The plurality of recess groups 130 are provided in the punching sheet main body 110, and the plurality of recess groups 130 are separately distributed around the shaft hole 120.

Each recess group 130 comprises a plurality of mounting recesses, a plurality of first auxiliary recesses 136 and a plurality of second auxiliary recesses 138, each mounting recess comprises two recess bodies 142, each recess body 142 comprises a permanent magnet recess section 148, and an end portion of each permanent magnet recess section 148 away from the shaft hole 120 is a matching portion 150.

The plurality of mounting recesses are separately arranged in a radial direction of the punching sheet main body 110, the mounting recesses in the plurality of mounting recesses closest to the shaft hole 120 are first mounting recesses 132, and the mounting recesses in the plurality of mounting recesses closest to an outer peripheral wall of the punching sheet main body 110 are second mounting recesses 134.

The plurality of first auxiliary recesses 136 and the plurality of second auxiliary recesses 138 are all arranged on an outer peripheral wall of the punching sheet main body 110.

The first auxiliary recesses 136 and the second mounting recesses 134 are correspondingly arranged.

The portion of the punching sheet main body 110 between two adjacent first mounting recesses 132is arranged corresponding to the second auxiliary recess 138.

The connecting lines between the matching portions 150 of the two recess bodies 142 of the first mounting recess 132 and the center 122 of the shaft hole form a first polar arc angleθ1, and the connecting lines between the matching portions 150 of the two recess bodies 142 of the second mounting recess 134 and the center 122 of the shaft hole form a second polar arc angle θ2; the plurality of first auxiliary recesses 136 are arranged separately along the circumferential direction of the punching sheet main body 110, the included angle between the connecting lines between the centers of the first auxiliary recesses 136 in the plurality of first auxiliary recesses 136 at two end portions in the circumferential direction of the punching sheet main body 110 and the center 122 of the shaft hole is α1, the number of the pole pairs of the motor is $p$,

and $\dfrac{0.1 \times 360^{\circ}}{2 \times \mathrm{p}} \leq \alpha 1 \leq 0.9 \times \theta 2$ ; the included angle between the connecting lines between the two end portions of the second auxiliary recess 138 in the circumferential direction of the punching sheet main body 110 and the center 122 of the shaft hole is α2, and $0^{\circ} \leq \alpha 2 \leq 0.75 \times \left( \dfrac{360^{\circ}}{2 \times \mathrm{p}} - \theta 1 \right)$.

Exemplarily, a punching sheet comprises the punching sheet main body 110, the shaft hole 120 and a plurality of recess groups 130, both the shaft hole 120 and the plurality of recess groups 130 are provided in the punching sheet main body 110, i.e., the punching sheet main body 110 is used as the mounting carrier of the shaft hole 120 and the plurality of recess groups 130.

The plurality of recess groups 130 are separately distributed around the shaft hole 120;each recess group 130 comprises a plurality of mounting recesses, a plurality of first auxiliary recesses 136 and a plurality of second auxiliary recesses 138. The plurality of mounting recesses are divided, the plurality of mounting recesses are separately arranged in a radial direction of the punching sheet main body 110, the mounting recesses in the plurality of mounting recesses closest to the shaft hole 120 are the first mounting recesses 132, and the mounting recesses in the plurality of mounting recesses closest to an outer peripheral wall of the punching sheet main body 110 are the second mounting recesses 134. That is, along the radial direction of the punching sheet main body 110, the first mounting recesses 132 are the innermost mounting recesses in the plurality of the mounting recesses, and the second mounting recesses 134 are the outermost mounting recesses in the plurality of the mounting recesses.

The rotor punching sheet 100 is used in a motor, the torque ripple of the motor is related to a non-sinusoidal wave air gap magnetic field. The higher the harmonic content in the air gap magnetic field is, the worse the waveform of the output torque of the motor is, and the greater the ripple is, the larger the NVH (Noise Vibration Harshness) is.

Thus, through reasonably arranging the matching structures of the first mounting recesses 132, the second mounting recesses 134, the first auxiliary recesses 136 and the second auxiliary recesses 138, the first auxiliary recesses 136 and the second mounting recesses 134 are correspondingly arranged; the portion of the punching sheet main body 110 between two adjacent first mounting recesses 132 and the second auxiliary recess 138 are correspondingly arranged. Therefore, the harmonic content in the air gap magnetic field can be effectively lowered, thus the sine degree of air gap magnetic density waveform is improved, the torque ripple of the motor is improved, the radial force caused by harmonics is reduced, the operating noise of the motor is reduced, and the NVH performance is improved, to improve the use performance and market competitiveness of the product.

The torque ripple and spatial electromagnetic force of the motor are the main sources of tangential and radial vibration noise of the motor; for a vehicle permanent magnet synchronous motor, its range of operation speed is wide, and its operation conditions are complex, the main torque ripple order and radial electromagnetic force density in a full speed range need to be optimized and considered, however, the currents and current angles under various operating conditions differ greatly. In the related art, adopting a certain optimization measure can only reduce the NVH performance of the motor in a specific working condition, while result in the deterioration of the NVH performance in other working conditions, and this often pays the price of sacrificing the torque, power, and efficiency performance of the motor.

However, through reasonably arranging the matching structures of the first mounting recesses 132, the second mounting recesses 134, the first auxiliary recesses 136 and the second auxiliary recesses 138, the present application can effectively avoid the above circumstances.

And the magnetic circuit where the first auxiliary recesses 136 are located is a d-axis magnetic circuit, and the magnetic circuit where the second auxiliary recesses 138 are located is a q-axis magnetic circuit; opening the first auxiliary recesses 136 in a d-axis can effectively reduce the main torque ripple order and radial electromagnetic force density of the motor in a working condition of high torque. Opening the second auxiliary recesses 138 in a q-axis can effectively reduce the main torque ripple order and radial electromagnetic force density of the motor in a working condition of low torque. In addition, the influence on the size of the output torque of the motor is relatively small.

However, when the auxiliary recesses are opened in the d-axis and the q-axis of the motor at the same time, i.e.,

when the outer peripheral wall of the punching sheet main body 110 is provided with the first auxiliary recesses 136 and the second auxiliary recesses 138, the induction of the d-axis and the q-axis of the motor lowers at the same time, and this will not affect the salient pole ratio of the motor (the salient pole ratio directly affects the torque output of the motor under high-speed performance), and can further increase the size of the peak power of the motor, reduce the armature reaction of the motor, and the influence on the peak torque performance of the motor is relatively small. In addition, the iron loss and demagnetization performance of the motor are directly related to the armature reaction of the motor, and the smaller the armature reaction is and the lower the iron loss of the motor is, the better the anti-demagnetization ability is, which is better to the output performance of the motor.

Therefore, arranging the first auxiliary recesses 136 and the second auxiliary recesses 138 in the outer peripheral wall of the punching sheet main body 110 can not only effectively improve the output performance of the motor, but also help lower the cost of the motor. Meanwhile, arranging the first auxiliary recesses 136 and the second auxiliary recesses 138 can also make partial adjustment to the no-load back-electromotive force waveform and radial force, reduce the maximum no-load line back-electromotive force of the motor and reduce the cost of a controller. On the basis that the average air gap length of the motor is not changed and the output torque of the motor is ensured not to be lowered, the air gap magnetic field is effectively improved, and this increases the sine degree of the air gap magnetic density and back-electromotive force waveforms, reduces the proportion of harmonics, and further reduces the torque ripple, and significantly reduces the vibration noise of the motor.

It is understandable that the first auxiliary recesses 136 in the plurality of first auxiliary recesses 136 at the two end portions in the circumferential direction of the punching sheet main body 110 indicates two first auxiliary recesses 136 located at the end portions along the circumferential direction of the punching sheet main body 110. In an embodiment, when there are two first auxiliary recesses 136, the included angle $\alpha1$ is the included angle between connecting lines between the centers of the two first auxiliary recesses 136 and the center 122 of the shaft hole; when there are three first auxiliary recesses 136, the included angle $\alpha1$ is the included angle between the connecting lines between the center of the first auxiliary recess 136 and the center of the third first auxiliary recess 136 and the center 122 of the shaft hole; when there are four auxiliary recesses 136, the included angle $\alpha1$ is the included angle between the connecting lines between the center of the first auxiliary recess 136 and the center of the fourth first auxiliary recess 136 and the center 122 of the shaft hole, and etc., which are not listed herein one by one.

The relations of the second polar arc angle $\theta2$, the number $p$ of the pole pairs of the motor and the included angle $\alpha1$ are defined to satisfy $\frac{0.1 \times 360^{\circ}}{2 \times p} \leq \alpha1 \leq 0.9 \times \theta2$, the value range of the included angle $\alpha1$ can represent the positions of two first auxiliary recesses 136 in the same polar arc area, which is specified as follows: the larger the value of the included angle $\alpha1$ is, the closer the two auxiliary recesses are to the outside and the smaller the distance between the two auxiliary recesses and an adjacent magnetic isolation bridge 158 is; the smaller the value of the included angle $\alpha1$ is, the closer the two auxiliary recesses are to the inside and the larger the distance between the two auxiliary recesses and the adjacent magnetic isolation bridge 158 is. The present application limits the angle $\alpha1$ to be within this range, which has a good improvement effect to the torque ripple in the high torque area of the motor and the electromagnetic force of the motor, and the first auxiliary recess 136 optimizes the magnetic circuit in a d-axis area of the motor as much as possible, effectively adjusts magnetic field distribution, and improves the torque ripple and the radial electromagnetic force of the motor.

The relations of the first polar arc angle $\theta1$, the number $p$ of the pole pairs of the motor and the included angle $\alpha2$ are defined to satisfy $0^{\circ} \leq \alpha2 \leq 0.75 \times \left(\frac{360^{\circ}}{2 \times p} - \theta1\right)$, the value range of $\alpha2$ represents the range of the optimization area of the q-axis magnetic circuit of the motor; the larger the value of $\alpha2$ is, the greater its influence on the q-axis magnetic circuit is, and it will affect the strength of the local rotor punching sheet of the motor. The present application limits the angle $\alpha2$ to be within this range, which can effectively optimize the torque ripple in the low torque region of the motor and improve the performance of the motor on the basis of ensuring the strength of the rotor punching sheet 100 of the motor.

Exemplarily, the punching sheet main body 110 is sectioned along an axial direction perpendicular to the shaft hole 120, and in the cross section, the contour line of the first auxiliary recess 136 is an axial symmetric figure. When the contour lines of both of the first auxiliary recess 136 and the second auxiliary recess 138 are circular arc, the center of the first auxiliary recess 136 is the circle center of the circular arc, and the center of the second auxiliary recess 138 is the circle center of the circular arc; when the contour lines of both of the first auxiliary recess 136 and the second auxiliary recess 138 are angular shapes, the center of the first auxiliary recess 136 is on the angular bisector of the angular shape, and the center of the second auxiliary recess 138 is on the angular bisector of the angular shape. When the contour lines of both of the first auxiliary recess 136 and the second auxiliary recess 138 are waveform lines, the center of the first auxiliary recess 136 is the mid-point of the waveform line, and the center of the second auxiliary recess 138 is the mid-point of the waveform line, and etc., which are not listed herein one by one. Exemplarily, the motor includes a permanent magnet synchronous motor.

Exemplarily, along the axial direction of the punching sheet main body 110, the punching sheet main body 110 comprises a first wall surface and a second wall surface, a portion of the outer peripheral wall of the punching sheet main body 110 is recessed in the direction of the shaft hole 120 to form the first auxiliary recesses 136 and the second auxiliary recesses 138; all of the first auxiliary recesses 136, the second auxiliary recesses 138 and the mounting recesses can communicate with the first wall surface and the second wall surface.

Exemplarily, the number of the recess groups 130 is A. Along the circumferential direction of the shaft hole 120, the outer peripheral wall of the punching sheet main body 110 comprises A sections of outer peripheral sub-walls, and each section of outer peripheral sub-wall corresponds to one recess group 130. Each section of outer peripheral sub-wall comprises a first region and a second region, the first region is provided with the first auxiliary recesses 136, the second region is provided with the second auxiliary recesses 138; the first region is arranged corresponding to the outermost mounting recesses (i.e., the second mounting recesses 134), and the second region is arranged corresponding to the portion between two adjacent first mounting recesses 132.

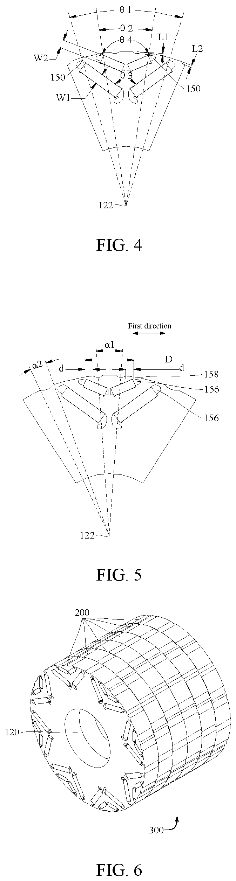

Furthermore, as shown in FIG. 4, a recess depth L1 of the first auxiliary recess 136 is greater than or equal to 0.2mmm, and less than or equal to 1.2mm; the recess depth L2 of the second auxiliary recess 138 is greater than or equal to 0.2mm, and less than or equal to 1.2mm.

And the shapes of the first auxiliary recess 136 and the second auxiliary recess 138 are further defined.

Exemplarily, the recess depth L1 of the first auxiliary recess 136 is greater than or equal to 0.2mmm, and less than or equal to 1.2mm, in an embodiment, the recess depth L1 of the first auxiliary recess 136 comprises 0.4mm, 0.5mm, 0.6mm, 0.7mm, 0.8mm, 0.9mm, 1mm and 1.1mm, etc., which are not listed herein one by one.

Exemplarily, the recess depth L2 of the second auxiliary recess 138 is greater than or equal to 0.2mm, and less than or equal to 1.2mm, in an embodiment, the recess depth L2 of the second auxiliary recess 138 comprises 0.4mm, 0.5mm, 0.6mm, 0.7mm, 0.8mm, 0.9mm, 1mm and 1.1mm, etc., which are not listed herein one by one.

Through reasonably disposing the recess depths of the first auxiliary recess 136 and the second auxiliary recess 138, in the case that the average air gap length of the motor is not changed and the output torque of the motor is ensured not to be changed, the distortion rate of the air gap magnetic density waveform of the motor is reduced, the torque ripple of the main order of the motor and the radial electromagnetic force density of the motor are significantly reduced, which can effectively improve the torque performance and vibration noise performance of the motor.

Furthermore, along an axial direction perpendicular to the shaft hole 120, the punching sheet main body 110 is sectioned, and in the cross section, the contour line of any of the first auxiliary recess 136 and the second auxiliary recess 138 comprises any one or the combination of an arc, a waveform line and a folding line.

And the shapes of the first auxiliary recess 136 and the second auxiliary recess 138 are further defined. Exemplarily, along an axial direction perpendicular to the shaft hole 120, the punching sheet main body 110 is sectioned, and in the cross section, the contour line of the first auxiliary recess 136 comprises any one or the combination of an arc, a waveform line and a folding line. Exemplarily, along an axial direction perpendicular to the shaft hole 120, the punching sheet main body 110 is sectioned, and in the cross section, the contour line of the second auxiliary recess 138 comprises any one or the combination of an arc, a waveform line and a folding line.

Furthermore, as shown in FIG. 3, when the contour line of any of the first auxiliary recess 136 and the second auxiliary recess 138 comprises an arc, the radius of the arc of the first auxiliary recess 136 is R1, the radius of the arc of the second auxiliary recess 138 is R2, and $0.35 \leq R1/R2 \leq 7.5$.

And through reasonably arranging the matching structures of the first auxiliary recesses 136 and the second auxiliary recesses 138, when the contour line of any of the first auxiliary recess 136 and the second auxiliary recess 138 comprises an arc, the radius of the arc of the first auxiliary recess 136 is R1, the radius of the arc of the second auxiliary recess 138 is R2, and R1 and R2 are defined to satisfy $0.35 \leq R1/R2 \leq 7.5$. This arrangement can prevent the area where the arc is located from being too large, and can prevent the equivalent magnetic resistance of the magnetic circuit from being too large as the first auxiliary recesses 136 and the second auxiliary recesses 138 are too large, and further reduce the occurrence of the circumstance of lowering the electromagnetic torque and the power of the motor, and this helps improve the torque ripple of the motor while the size of the electromagnetic torque of the motor is considered.

Furthermore, as shown in FIG. 1, FIG. 2 and FIG. 3, there are a plurality of first auxiliary recesses 136, the plurality of first auxiliary recesses 136 are arranged separately along the circumferential direction of the punching sheet main body 110, and the plurality of first auxiliary recesses 136 are symmetrically arranged along the centerline of the magnetic pole where they are located.

Exemplarily, there are a plurality of first auxiliary recesses 136, i.e., each recess group 130 comprises a plurality of mounting recesses, a plurality of first auxiliary recesses 136 and a plurality of second auxiliary recesses 138.

The plurality of first auxiliary recesses 136 are symmetrically arranged along the centerline of the magnetic pole where they are located. That is, a portion of the plurality of first auxiliary recesses 136 are located at a first side of the centerline of the magnetic pole where they are located, and the other portion of the plurality of first auxiliary recesses 136 are located at a second side of the centerline of the magnetic pole where they are located.

Exemplarily, along an axial direction perpendicular to the motor, the first auxiliary recess 136 is sectioned, and the shape of the contour line of the first auxiliary recess 136 comprises any one of a trapezoid, an arc, a rectangle and a serrated shape.

Exemplarily, along an axial direction perpendicular to the motor, the second auxiliary recess 138 is sectioned, and the shape of the contour line of the second auxiliary recess 138 comprises any one of a trapezoid, an arc, a rectangle and a serrated shape.

In the present embodiment, there are two first auxiliary recesses 136, and the two first auxiliary recesses 136 are symmetrically arranged along the centerline of the magnetic pole where they are located. That is, one of the first auxiliary recesses 136 is located at the first side of the centerline of the magnetic pole where they are located, and the other one of the first auxiliary recesses 136 is located at the second side of the centerline of the magnetic pole where they are located.

In some other embodiments, there are four first auxiliary recesses 136, and the four first auxiliary recesses 136 are symmetrically arranged along the centerline of the magnetic pole where they are located. That is, two of the first auxiliary recesses 136 are located at the first side of the centerline of the magnetic pole where they are located, and the other two of the first auxiliary recesses 136 are located at the second side of the centerline of the magnetic pole where they are located, and etc., which are not listed herein one by one.

Exemplarily, the shapes of the plurality of first auxiliary recesses 136 are the same. Or, a portion of the plurality of first auxiliary recesses 136 have the same shape, and the other portion of the plurality of first auxiliary recesses 136 have different shapes.

Furthermore, the second auxiliary recesses 138 are symmetrically arranged along the bisector of the magnetic pole.

Exemplarily, the shapes of the second auxiliary recesses 138 are further defined, and the second auxiliary recesses 138 are symmetrically arranged along the bisector of the magnetic pole. That is, the second auxiliary recess 138 is an axial symmetrical structure, which can effectively reduce the harmonic content in the air gap magnetic field, thus improve the sine degree of the air gap magnetic density waveform, effectively improve the torque ripple and the radial force, and reduce the amplitude of the maximum no-load line back-electromotive force of the motor.

In the present embodiment, each recess group 130 comprises one second auxiliary recess 138.

As shown in FIG. 1 and FIG. 2, furthermore, the number of the first auxiliary recesses 136 is *2p,* the number of the second auxiliary recesses 138 is *p,* and *p* also is the number of the pole pairs of the motor.

Exemplarily, the proportional relationship of the numbers of the first auxiliary recesses 136 and the second auxiliary recesses 138 is further defined, and the number of the first auxiliary recesses 136 is *2p,* the number of the second auxiliary recesses 138 is *p*. That is, the number of the first auxiliary recesses 136 is twice of the number of the second auxiliary recesses 138.

*2p* first auxiliary recesses 136 are matched with *p* second auxiliary recesses 138, which can further reduce the harmonic content in the air gap magnetic field, thus enhance the sine degree of the air gap magnetic density waveform, and effectively improve the torque ripple and the radial force; meanwhile, arranging *2p* first auxiliary recesses 136 and *p* second auxiliary recesses 138 at the same time can also make partial adjustment to the no-load back-electromotive force waveform and reduce the amplitude of the maximum no-load line back-electromotive force of the motor.

As shown in FIG. 1 and FIG. 2, furthermore, as shown in FIG. 2, FIG. 3 and FIG. 4, each mounting recess comprises two recess bodies 142, each recess body 142 comprises a first end portion 144, a second end portion 146 and a permanent magnet recess section 148, and the permanent magnet recess section 148 is connected between the first end portion 144 and the second end portion 146.

The first end portions 144 of the two recess bodies 142 of each mounting recess are arranged closely adjacent to each other, and the second end portions 146 of the two recess bodies 142 of each mounting recess are arranged away from each other.

The width of the permanent magnet recess section 148 of the first mounting recess 132 is W1, and the width of the permanent magnet recess section 148 of the second mounting recess 134 is W2.

And 10°≤θ1-θ2≤22.5°, and $1.1 \leq \frac{W1}{W2} \leq 2.5$.

Exemplarily, each mounting recess comprises two recess bodies 142, any one of the two recess bodies 142 comprises the first end portion 144, the second end portion 146 and the permanent magnet recess section 148. The permanent magnet recess section 148 comprises a matching portion 150, and the matching portion 150 is an end portion of the permanent magnet recess section 148 away from the shaft hole 120.

Through reasonably arranging the structure of the plurality of mounting recesses, the connecting lines between the matching portions 150 of the two recess bodies 142 of the first mounting recess 132 and the center 122 of the shaft hole form the first polar arc angle θ1, and the connecting lines between the matching portions 150 of the two recess bodies 142 of the second mounting recess 134 and the center 122 of the shaft hole form the second polar arc angle θ2; the difference between the first polar arc angle θ1 and the second polar arc angle θ2 satisfies 10°≤θ1-θ2≤22.5°.

In addition, the width W1 of the permanent magnet recess section 148 of the first mounting recess 132 and the width W2 of the permanent magnet recess section 148 of the second mounting recess 134 satisfy $1.1 \leq \frac{W1}{W2} \leq 2.5$ .

It is understandable that both the permanent magnet recess section 148 of the first mounting recess 132 and the permanent magnet recess section 148 of the second mounting recess 134 are for mounting permanent magnets.

In a permanent magnet synchronous motor, the values of the width W1 of the permanent magnet recess section 148 of the first mounting recess 132 in an inner layer magnetic pole and the width W2 of the permanent magnet recess section 148 of the second mounting recess 134 in an outer layer magnetic pole have a relatively large influence on the magnetic resistance of a direct-axis magnetic circuit of the motor. That is, it has a relatively large influence on the induction of direct-axis magnetic circuit.

The values of the first polar arc angle θ1 of the first mounting recess 132 in the inner layer magnetic pole and the second polar arc angle θ2 in the outer layer magnetic pole have a relatively large influence on the magnetic resistance of a cross-axis magnetic circuit of the motor, i.e., it has a relatively large influence on the induction of the cross-axis magnetic circuit.

The salient pole ratio of the motor is the ratio of the cross-axis inductance to the direct-axis inductance, and the electromagnetic torque of the motor is a reluctance torque plus a permanent magnet torque. There is a numerical relationship of positive correlation between the amount of permanent magnets and the permanent magnet torque.

In the present application, through defining the values of the width W1 of the permanent magnet recess section 148 of the first mounting recess 132 in the inner layer magnetic pole, the width W2 of the permanent magnet recess section 148 of the second mounting recess 134 in the outer layer magnetic pole, the first polar arc angle θ1 of the first mounting recess 132 in the inner layer magnetic pole and the second polar arc angle θ2 in the outer layer magnetic pole, the ratio of the cross-axis inductance to the direct-axis inductance of the motor can be increased, and the salient pole ratio is enhanced; while after the salient pole ratio is enhanced, the utilization rate of the reluctance torque by the motor is also improved; when the motor outputs the electromagnetic torques of the same size, the permanent magnet torque can be relatively small, and then the amount of permanent magnets is reduced and thus the cost is lowered.

In addition, the air gap composite magnetic field in the motor is generated by the joint effect of the permanent magnet in the inner layer magnetic pole and the permanent magnet in the outer layer magnetic pole, and comprises a fundamental wave and a harmonic wave, and the contents and proportions of the fundamental wave and the harmonic wave in the air gap magnetic field directly determine the torque output capability and NVH performance of the motor. The larger the fundamental wave is and the smaller the harmonic wave is, the higher the torque output is and the better the NVH performance of the motor is. Conversely, the smaller the output torque is, the worse the NVH performance is.

The contents, proportions and sizes of the fundamental wave and harmonic wave in the air gap magnetic field are related to the sizes of the polar arc angles of the inner layer magnetic pole and the outer layer magnetic pole. Through defining the values of the width W1 of the permanent magnet recess section 148 of the first mounting recess 132 in inner layer magnetic pole, the width W2 of the permanent magnet recess section 148 of the second mounting recess 134 in the outer layer magnetic pole, the first polar arc angle θ1 of the first mounting recess 132 in the inner layer magnetic pole and the second polar arc angle θ2 in the outer layer magnetic pole, the waveform of the air gap composite magnetic field can be optimized, the harmonic content in the air gap magnetic field is effectively reduced, the sine of the waveform of the air gap magnetic field is enhanced, and the cogging torque and torque ripple of the permanent magnet synchronous motor are reduced, and the vibration noise of the motor is reduced.

Exemplarily, the difference between θ1 and θ2 comprises 12°, 14°, 16°, 18°, 20°, etc., which are not listed herein one by one.

Exemplarily, the ratio of W1 to W2 comprises 1.6, 1.7, 1.8, 1.9, 2, 2.1, 2.2, 2.3, 2.4, etc., which are not listed herein one by one.

Exemplarily, $1 \leq \frac{W1}{W2} \leq 2$ .

It is understandable that the permanent magnet recess section 148 is connected between the first end portion 144 and the second end portion 146; a portion of the permanent magnet recess section 148 is for mounting permanent magnets, the other portion of the permanent magnet recess section 148 is for connecting the first end portion 144 with the portion of the permanent magnet recess section 148 which is for mounting permanent magnets, and for connecting the second end portion 146 with the portion of the permanent magnet recess section 148 which is for mounting permanent magnets. That is, the permanent magnet recess section 148 which is connected to the first end portion 144 and the second end portion 146 comprises a first direct section and a second direct section, the first direct section and the second direct section are arranged separately along the radial direction of the punching sheet main body 110, and the first direct section is located between the second direct section and the shaft hole 120. Thus, the matching portion 150 can be understood as the connection between the second end portion 146 and the second direct section.

Furthermore, as shown in FIG. 4, the first polar arc angle θ1 and the number *p* of the pole pairs of the motor satisfy

$$0.5 \times \frac{360°}{2 \times p} \leq \theta1 \leq 0.85 \times \frac{360°}{2 \times p}$$ ; the second polar arc angle$\theta2$ and the number $p$ of the pole pairs of the motor satisfy $$0.2 \times \frac{360°}{2 \times p} \leq \theta2 \leq 0.5 \times \frac{360°}{2 \times p}$$ .

The width W1 of the permanent magnet recess section 148 of the first mounting recess 132 is greater than or equal to 2mm, and less than or equal to 6mm.

The width W2 of the permanent magnet recess section 148 of the second mounting recess 134 is greater than or equal to 1mm, and less than or equal to 5mm.

Exemplarily, the value of the width W1 of the permanent magnet recess section 148 of the first mounting recess 132 comprises 2.2mm, 2.5mm, 2.8mm, 3mm, 3.5mm, 3.8mm, 4mm, 4.5mm, 5mm, 5.5mm, etc., which are not listed herein one by one.

Exemplarily, the value of the width W2 of the permanent magnet recess section 148 of the second mounting recess 134 comprises 1.5mm, 2mm, 2.5mm, 2.8mm, 3mm, 3.2mm, 3.5mm, 3.8mm, 4mm, 4.5mm, 4.8mm, etc., which are not listed herein one by one.

Furthermore, as shown in FIG. 5, along the circumferential direction of the shaft hole 120, both ends of the second mounting recess 134 comprise the magnetic isolation holes 156, and the magnetic isolation bridge 158 is formed between the magnetic isolation hole 156 and the outer peripheral wall of the punching sheet main body 110; along a first direction, the minimum distance between the first auxiliary recesses 136 and the adjacent magnetic isolation bridge 158 is d, the minimum distance between the two magnetic isolation bridges 158 at the end portions of the two ends of the second mounting recess 134 is D, and d≤k×D, k ∈ [0.05,0.45], and d is greater than or equal to the thickness of the punching sheet main body 110.

And along the circumferential direction of the shaft hole 120, both ends of the second mounting recess 134 comprise the magnetic isolation holes 156, i.e., along the circumferential direction of the shaft hole 120, the size of the second mounting recess 134 is greater than the size of the permanent magnet; after the permanent magnets are inserted into the mounting recess, there is a certain gap between the permanent magnets and the two ends of the second mounting recess 134, which can suppress interpole magnetic flux leakage. And the area between the middle part of the second mounting recess 134 where the permanent magnets are inserted and the outer peripheral wall of the punching sheet main body 110 is the polar arc area; the area between the magnetic isolation holes 156 at both ends of the second mounting recess 134 and the outer peripheral wall of the punching sheet main body 110 is the magnetic isolation bridge 158, and thus, both sides of the polar arc area are provided with the magnetic isolation bridges 158, and the principle of the magnetic isolation bridge 158 is to play the role of limiting magnetic leakage by reaching saturation of the magnetic flux at the position of magnetic bridges. The relationship between d and D is limited to be within the above range, and the area where the first auxiliary recess 136 is located covers the vicinity of the magnetic isolation bridge 158 as much as possible, and it is ensured that the first auxiliary recess 136 appears in the area with relatively saturated magnetic flux, and this can effectively adjust magnetic field distribution, improve the torque ripple, and prevent that the area where the first auxiliary recess 136 is located is too wide, and then leads to an excessively large equivalent magnetic resistance of the magnetic circuit and thus the lowers the motor torque; by making the minimum horizontal distance d between the first auxiliary recess 136 and the adjacent magnetic isolation bridge 158 greater than or equal to the thickness of the punching sheet main body 110, it is prevented that the rotor is broken as a local area of the rotor is too thin, to improve the strength of the rotor punching sheet 100 and the use reliability of the rotor.

As shown in FIG. 1 and FIG. 2, furthermore, as shown in FIG. 2 and FIG. 3, the first end portion 144 of the recess body 142 is closer to the shaft hole 120 than the second end portion 146.

Exemplarily, the shape of the recess body 142 is further defined, the first end portion 144 of the recess body 142 is closer to the shaft hole 120 than the second end portion 146, the first end portions 144 of the two recess bodies 142 of each mounting recess are arranged closely adjacent to each other, and the second end portions 146 of the two recess bodies 142 of each mounting recess are arranged away from each other. That is, the two recess bodies 142 of each mounting recess are arranged in a V shape, and the opening of the V shape faces the outer peripheral wall of the punching sheet main body 110, and in other words, the tip of the V shape faces the shaft hole 120.

Exemplarily, a mounting region can be formed between the mounting recess in the inner layer and the outer peripheral wall of the punching sheet main body 110, and the mounting recess in the outer layer is located in the mounting region.

In an embodiment, the mounting region can be formed between the first mounting recess 132 and the outer peripheral wall of the punching sheet main body 110, and the second mounting recess 134 is located in the mounting region.

Apparently, the shape of the second mounting recess 134 comprises, but is not limited to, the V shape, and can also be a straight shape or a concave shape, etc., which are not listed herein one by one.

The shape of the first mounting recess 132 comprises, but is not limited to, the V shape, and can also be a concave shape, etc., which are not listed herein one by one.

As shown in FIG. 1 and FIG. 2, furthermore, as shown in FIG. 2, FIG. 3 and FIG. 4, the two permanent magnet recess sections 148 of the first mounting recess 132 and the two permanent magnet recess sections 148 of the second mounting recess 134 comprise first end surfaces 152 and second end surfaces 154 in the radial direction of the punching sheet main body 110, and the first end surfaces 152 are closer to the shaft hole 120 than the second end surfaces 154.

A first magnetic pole angle θ3 is formed between the two second end surfaces 154 of the first mounting recess 132, and a second magnetic pole angle θ4 is formed between the two second end surfaces 154 of the second mounting recess 134.

And 0°≤θ4-θ3≤60°.

Exemplarily, the structures of the first mounting recess 132 and the second mounting recess 134 are further defined; both of the two permanent magnet recess sections 148 of the first mounting recess 132 comprise the first end surfaces 152 and the second end surfaces 154 in the radial direction of the punching sheet main body 110, and both of the two permanent magnet recess sections 148 of the second mounting recess 134 comprise the first end surfaces 152 and the second end surfaces 154 in the radial direction of the punching sheet main body 110.

The first end surfaces 152 are closer to the shaft hole 120 than the second end surfaces 154, i.e., the distance from the first end surface 152 to the center 122 of the shaft hole is less than the distance from the second end surface 154 to the center 122 of the shaft hole.

The first magnetic pole angle θ3 is formed between the two second end surfaces 154 of the first mounting recess 132, and the second magnetic pole angle θ4 is formed between the two second end surfaces 154 of the second mounting recess 134, and the difference between the first magnetic pole angle θ3 and the second magnetic pole angle θ4 satisfies 0°≤θ4-θ3≤60°.

The first polar arc angle θ1, the second polar arc angle θ2, the first magnetic pole angle θ3 and the second magnetic pole angle θ4 cooperate with each other, and they cooperate with the width W1 of the permanent magnet recess section 148 of the first mounting recess 132 in inner layer magnetic pole and the width W2 of the permanent magnet recess section 148 of the second mounting recess 134 in outer layer magnetic pole, and this can increase the ratio of the cross-axis inductance to the direct-axis inductance of the motor, and enhance the salient pole ratio; while after the salient pole ratio is enhanced, the utilization rate of the reluctance torque by the motor is also improved; when the motor outputs the electromagnetic torques of the same size, the permanent magnet torque can be relatively small, and then the amount of permanent magnets can be reduced and thus the cost is lowered.

The contents, proportions and sizes of the fundamental wave and harmonic wave in the air gap magnetic field are related to the sizes of the polar arc angles of the inner layer magnetic pole and the outer layer magnetic pole and the magnetic pole angle. Through defining the values of the width W1 of the permanent magnet recess section 148 of the first mounting recess 132 in inner layer magnetic pole, the width W2 of the permanent magnet recess section 148 of the second mounting recess 134 in outer layer magnetic pole, the first polar arc angle θ1 of the first mounting recess 132 in the inner layer magnetic pole, the second polar arc angle θ2 in the outer layer magnetic pole, the first magnetic pole angle θ3 in inner layer magnetic pole and the second magnetic pole angle θ4 in outer layer magnetic pole, the waveform of the air gap composite magnetic field can be optimized, the harmonic content in the air gap magnetic field is effectively reduced, the sine of the waveform of the air gap magnetic field is enhanced, and the cogging torque and torque ripple of the permanent magnet synchronous motor are reduced, and the vibration noise of the motor is reduced.

Exemplarily, the difference between θ4 and θ3 comprises 5°, 10°, 15°, 20°, 25°, 30°, 35°, 40°, 45°, 50°, 55°, 60°, etc., which are not listed herein one by one.

Furthermore, the first magnetic pole angle θ3 is greater than or equal to 80°, and less than or equal to 130°.

The second magnetic pole angle θ4 is greater than or equal to 90°, and less than or equal to 150°.

And the value ranges of the first magnetic pole angle θ3 and the second magnetic pole angle θ4 are further defined.

Exemplarily, angle of the first magnetic pole angle θ3 comprises 85°, 90°, 95°, 100°, 105°, 110°, 115°, 120°, 125°, etc., which are not listed herein one by one.

Exemplarily, angle of the second magnetic pole angle θ4 comprises 95°, 100°, 105°, 110°, 115°, 120°, 125°, 130°, 135°, 140°, 145°, etc., which are not listed herein one by one.

As shown in FIG. 1, an embodiment according to the second aspect of the present application provides a rotor core 200, comprising: a plurality of rotor punching sheets 100 of any of the embodiments in the first aspect, and the plurality of rotor punching sheets 100 are stacked; and the recess bodies 142 of the plurality of rotor punching sheets 100 are communicated along the axial direction of the punching sheet main body 110 to form a plurality of inserting slots.

Exemplarily, the rotor core 200 comprises a plurality of rotor punching sheets 100, and the plurality of rotor punching sheets 100 are stacked.

It is understandable that the recess bodies 142 of the plurality of rotor punching sheets 100 are communicated along the axial direction of the punching sheet main body 110 to form a plurality of inserting slots, and the inserting slots are for accommodating permanent magnets.

The punching sheet comprise the punching sheet main body 110, the shaft hole 120 and a plurality of recess groups 130, the shaft hole 120 and the plurality of recess groups 130 are all provided in the punching sheet main body 110, i.e., the punching sheet main body 110 is used as the mounting carrier of the shaft hole 120 and the plurality of recess groups 130.

The plurality of recess groups 130 are arranged separately around the shaft hole 120, and each recess group 130 comprises a plurality of mounting recesses, first auxiliary recesses 136 and second auxiliary recesses 138. The plurality of mounting recesses are divided, the plurality of mounting recesses are arranged separately along the radial direction of the punching sheet main body 110, the mounting recesses in the plurality of mounting recesses closest to the shaft hole 120 are the first mounting recesses 132, and the mounting recesses in the plurality of mounting recesses closest to an outer peripheral wall of the punching sheet main body 110 are the second mounting recesses 134. That is, along the radial direction of the punching sheet main body 110, the first mounting recesses 132 are the innermost mounting recesses in the plurality of the mounting recesses, and the second mounting recesses 134 are the outermost mounting recesses in the plurality of the mounting recesses.

The rotor punching sheet 100 is used in a motor, and the torque ripple of the motor is related to a non-sinusoidal wave air gap magnetic field. The higher the harmonic content in the air gap magnetic field is, the worse the waveform of the output torque of the motor is, and the greater the ripple is, the larger the NVH (Noise Vibration Harshness) is.

Thus, through reasonably arranging the matching structures of the first mounting recesses 132, the second mounting recesses 134, the first auxiliary recesses 136 and the second auxiliary recesses 138, the first auxiliary recesses 136 and the second mounting recesses 134 are correspondingly arranged; the portion of the punching sheet main body 110 between two adjacent first mounting recesses 132 and the second auxiliary recess 138 are correspondingly arranged. Therefore, the harmonic content in the air gap magnetic field can be effectively lowered, thus the sine degree of air gap magnetic density waveform is improved, the torque ripple of the motor is improved, the radial force caused by harmonics is reduced, the operating noise of the motor is reduced, and the NVH performance is improved, to improve the use performance and market competitiveness of the product.

Exemplarily, the torque ripple and spatial electromagnetic force of the motor are the main sources of tangential and radial vibration noise of the motor; for a vehicle permanent magnet synchronous motor, its range of operation speed is wide, and its operation conditions are complex, the main torque ripple order and radial electromagnetic force density in a full speed range need to be optimized and considered, however, the currents and current angles under various operating conditions differ greatly. In the related art, adopting a certain optimization measure can only reduce the NVH performance of the motor in a specific working condition, while result in the deterioration of the NVH performance in other working conditions, and this often pays the price of sacrificing the torque, power, and efficiency performance of the motor.

However, through reasonably arranging the matching structures of the first mounting recesses 132, the second mounting recesses 134, the first auxiliary recesses 136 and the second auxiliary recesses 138, the present application can effectively avoid the above circumstances.

And the magnetic circuit where the first auxiliary recesses 136 are located is a d-axis magnetic circuit, and the magnetic circuit where the second auxiliary recesses 138 are located is a q-axis magnetic circuit; opening the first auxiliary recesses 136 in a d-axis can effectively reduce the main torque ripple order and radial electromagnetic force density of the motor in a working condition of high torque. Opening the second auxiliary recesses 138 in a q-axis can effectively reduce the main torque ripple order and radial electromagnetic force density of the motor in a working condition of low torque. In addition, the influence on the size of the output torque of the motor is relatively small.

However, when the auxiliary recesses are opened in the d-axis and the q-axis of the motor at the same time, i.e., when the outer peripheral wall of the punching sheet main body 110 is provided with the first auxiliary recesses 136 and the second auxiliary recesses 138, the induction of the d-axis and the q-axis of the motor lowers at the same time, and this will not affect the salient pole ratio of the motor (the salient pole ratio directly affects the torque output of the motor under high-speed performance), and can further increase the size of the peak power of the motor, reduce the armature reaction of the motor, and the influence on the peak torque performance of the motor is relatively small. In addition, the iron loss and demagnetization performance of the motor are directly related to the armature reaction of the motor, and the smaller the armature reaction is and the lower the iron loss of the motor is, the better the anti-demagnetization ability is, which is better to the output performance of the motor.

Therefore, arranging the first auxiliary recesses 136 and the second auxiliary recesses 138 in the outer peripheral wall of the punching sheet main body 110 can not only effectively improve the output performance of the motor, but also help lower the cost of the motor. Meanwhile, arranging the first auxiliary recesses 136 and the second auxiliary recesses 138 can also make partial adjustment to the no-load back-electromotive force waveform and radial force, reduce the maximum no-load line back-electromotive force of the motor and reduce the cost of a controller. On the basis that the average air gap length of the motor is not changed and the output torque of the motor is ensured not to be lowered, the air gap magnetic field is effectively improved, and this increases the sine degree of the air gap magnetic density and back-electromotive force waveforms, reduces the proportion of harmonics, and further reduces the torque ripple, and significantly reduces the vibration noise of the motor.

As shown in FIG. 6, an embodiment according to the third aspect of the present application provides a rotor 300, comprising: the rotor core 200 of the second aspect; and a plurality of permanent magnets, and each inserting slot is arranged with a permanent magnet.

Exemplarily, the rotor 300 comprises the rotor core 200 and the plurality of permanent magnets.

The rotor core 200 comprises a plurality of rotor punching sheets 100, and the plurality of rotor punching sheets 100 are stacked.

The punching sheet comprise the punching sheet main body 110, the shaft hole 120 and a plurality of recess groups 130, the shaft hole 120 and the plurality of recess groups 130 are all provided in the punching sheet main body 110, i.e., the punching sheet main body 110 is used as the mounting carrier of the shaft hole 120 and the plurality of recess groups 130.

The plurality of recess groups 130 are arranged separately around the shaft hole 120, and each recess group 130 comprises a plurality of mounting recesses, first auxiliary recesses 136 and second auxiliary recesses 138. The plurality of mounting recesses are divided, the plurality of mounting recesses are arranged separately along the radial direction of the punching sheet main body 110, the mounting recesses in the plurality of mounting recesses closest to the shaft hole 120 are the first mounting recesses 132, and the mounting recesses in the plurality of mounting recesses closest to an outer peripheral wall of the punching sheet main body 110 are the second mounting recesses 134. That is, along the radial direction of the punching sheet main body 110, the first mounting recesses 132 are the innermost mounting recesses in the plurality of the mounting recesses, and the second mounting recesses 134 are the outermost mounting recesses in the plurality of the mounting recesses.

The rotor punching sheet 100 is used in a motor, and the torque ripple of the motor is related to a non-sinusoidal wave air gap magnetic field. The higher the harmonic content in the air gap magnetic field is, the worse the waveform of the output torque of the motor is, and the greater the ripple is, the larger the NVH (Noise Vibration Harshness) is.

Thus, through reasonably arranging the matching structures of the first mounting recesses 132, the second mounting recesses 134, the first auxiliary recesses 136 and the second auxiliary recesses 138, the first auxiliary recesses 136 and the second mounting recesses 134 are correspondingly arranged; the portion of the punching sheet main body 110 between two adjacent first mounting recesses 132 and the second auxiliary recess 138 are correspondingly arranged. Therefore, the harmonic content in the air gap magnetic field can be effectively lowered, thus the sine degree of air gap magnetic density waveform is improved, the torque ripple of the motor is improved, the radial force caused by harmonics is reduced, the operating noise of the motor is reduced, and the NVH performance is improved, to improve the use performance and market competitiveness of the product.

Exemplarily, the torque ripple and spatial electromagnetic force of the motor are the main sources of tangential and radial vibration noise of the motor; for a vehicle permanent magnet synchronous motor, its range of operation speed is wide, and its operation conditions are complex, the main torque ripple order and radial electromagnetic force density in a full speed range need to be optimized and considered, however, the currents and current angles under various operating conditions differ greatly. In the related art, adopting a certain optimization measure can only reduce the NVH performance of the motor in a specific working condition, while result in the deterioration of the NVH performance in other working conditions, and this often pays the price of sacrificing the torque, power, and efficiency performance of the motor.

However, through reasonably arranging the matching structures of the first mounting recesses 132, the second mounting recesses 134, the first auxiliary recesses 136 and the second auxiliary recesses 138, the present application can effectively avoid the above circumstances.

And the magnetic circuit where the first auxiliary recesses 136 are located is a d-axis magnetic circuit, and the magnetic circuit where the second auxiliary recesses 138 are located is a q-axis magnetic circuit; opening the first auxiliary recesses 136 in a d-axis can effectively reduce the main torque ripple order and radial electromagnetic force density of the motor in a working condition of high torque. Opening the second auxiliary recesses 138 in a q-axis can effectively reduce the main torque ripple order and radial electromagnetic force density of the motor in a working condition of low torque. In addition, the influence on the size of the output torque of the motor is relatively small.

However, when the auxiliary recesses are opened in the d-axis and the q-axis of the motor at the same time, i.e., when the outer peripheral wall of the punching sheet main body 110 is provided with the first auxiliary recesses 136 and the second auxiliary recesses 138, the induction of the d-axis and the q-axis of the motor lowers at the same time, and this will not affect the salient pole ratio of the motor (the salient pole ratio directly affects the torque output of the motor under high-speed performance), and can further increase the size of the peak power of the motor, reduce the armature reaction of the motor, and the influence on the peak torque performance of the motor is relatively small. In addition, the iron loss and demagnetization performance of the motor are directly related to the armature reaction of the motor, and the smaller the armature reaction is and the lower the iron loss of the motor is, the better the anti-demagnetization ability is, which is better to the output performance of the motor.

Therefore, arranging the first auxiliary recesses 136 and the second auxiliary recesses 138 in the outer peripheral wall of the punching sheet main body 110 can not only effectively improve the output performance of the motor, but also help lower the cost of the motor. Meanwhile, arranging the first auxiliary recesses 136 and the second auxiliary recesses 138 can also make partial adjustment to the no-load back-electromotive force waveform and radial force, reduce the maximum no-load line back-electromotive force of the motor and reduce the cost of a controller. On the basis that the average air gap length of the motor is not changed and the output torque of the motor is ensured not to be lowered, the air gap magnetic field is effectively improved, and this increases the sine degree of the air gap magnetic density and back-electromotive force waveforms, reduces the proportion of harmonics, and further reduces the torque ripple, and significantly reduces the vibration noise of the motor.

Furthermore, as shown in FIG. 6, there are a plurality of rotor cores 200, and the plurality of rotor cores 200 are stacked along the axial direction of the shaft hole 120.

There is a relative rotation angle between any two rotor cores 200, the plurality of rotor cores 200 comprise a plurality of relative rotation angles, and the maximum value β of the plurality of relative rotation angles satisfies $\frac{0.5 \times 360° \times (N-1)}{N \times Z} \leq \beta \leq \frac{1.1 \times 360° \times (N-1)}{N \times Z}$, and N is the number of the rotor cores 200, and Z is number of the stator recesses of the motor.

And there are also a series of tooth harmonics in the motor, which are the main sources of the vibration noise of the motor, and the harmonic content is further weakened in combination with rotor segmented oblique poles, and this can further improve the vibration noise of the motor. However, the rotor segmented oblique poles will also reduce the content of the fundamental wave in the motor while effectively reduce the harmonic content in the motor, and then affect the electromagnetic torque of the motor, and therefore, the maximum relative rotation angle formed by segmenting the rotor of the motor along the circumferential direction is limited to be within the range of $\frac{0.5 \times 360° \times (N-1)}{N \times Z} \leq \beta \leq \frac{1.1 \times 360° \times (N-1)}{N \times Z}$; when the oblique pole angle (the maximum relative rotation angle β between the rotor cores 200) is within the range, the electromagnetic torque of the motor can be ensured, and meanwhile, the magnetic leakage at the end portion of a magnetic steel is lowered as much as possible, the utilization rate of the magnetic steel is improved, the cogging torque is weakened, the torque ripple of the motor is reduced, the distribution of the air gap magnetic field is improved, the distortion rate of the air gap magnetic field is reduced, and the NVH performance of the motor is improved.

By combining the structure of the rotor punching sheets 100, the maximum relative rotation angle between the rotor cores 200 and the number of the rotor cores 200 in different ways, they can be applied in different situations and meet the usage needs of different models of motors, and the waveform of the air gap composite magnetic field is optimized more flexibly to meet product requirements.

In addition, through limiting the maximum value β of the plurality of relative rotation angles, the magnetic leakage at the end portion of the permanent magnets is lowered as much as possible while the output torque of the motor is ensured, the utilization rate of the permanent magnets is improved, the cogging torque is weakened, the torque ripple of the motor is reduced, at the same time, the distribution of the air gap magnetic field is improved, the distortion rate of the air gap magnetic field is lowered, and the waveform distribution of the no-load back-electromotive force is made more sinusoidal.

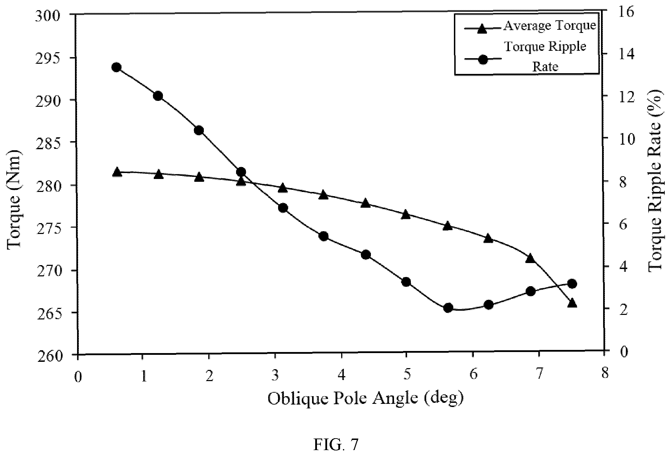

Exemplarily, as shown in FIG. 7, the oblique pole angle is in the range of $\frac{0.5 \times 360° \times (N-1)}{N \times Z} \leq \beta \leq \frac{1.1 \times 360° \times (N-1)}{N \times Z}$, when the electromagnetic torque of the motor is ensured, the magnetic leakage at the end portion of the magnetic steel is lowered as much as possible, the utilization rate of the magnetic steel is improved, the cogging torque is weakened, the torque ripple of the motor is reduced, the distribution of the air gap magnetic field is improved, the distortion rate of the air gap magnetic field is reduced, and the NVH performance of the motor is improved.

In addition, FIG. 7 shows the variation curves of the torque ripple rate and maximum no-load line back-electromotive force amplitude of the motor which vary with the oblique pole angle; when the oblique pole angle varies within the above range, corresponding to the value of any oblique pole angle, it can be seen that the electromagnetic torque and torque ripple rate of the motor are at the optimal level at the moment.

An embodiment according to the fourth aspect of the present application provides a motor, comprising the rotor 300 in the third aspect.

Exemplarily, the motor comprises the rotor 300 in the third aspect, and thus has all the beneficial effects of the above rotor, which are not stated herein one by one.

An embodiment of the fifth aspect of the present application provides a vehicle, comprising the motor in the fourth aspect.

Exemplarily, the vehicle comprises the motor in the fourth aspect, and thus has all the beneficial effects of the above motor, which are not stated herein one by one.

And the vehicle can be a new energy vehicle. The new energy vehicle includes a pure electric vehicle, an extended range electric vehicle, a hybrid electric vehicle, a fuel cell electric vehicle, a hydrogen engine vehicle, etc.

Taking a motor with 8-poles and 48 recesses as an example, the number *p* of the pole pairs of the motor is 4, the number Z of the recesses of the motor is 48, the segments of the motor is N=4 (i.e., the number of the rotor cores 200 is 4). The first polar arc angle $\theta$1 of the V-type magnetic pole structure in the inner layer of the motor is greater than or equal to 22.5°, and less than or equal to 38.25°. The second polar arc angle $\theta$2 of the V-type magnetic pole structure in the outer layer of the motor is greater than or equal to 4.5°, and less than or equal to 22.5°. The width W1 of the permanent magnet recess section 148 of the first mounting recess 132 of the V-type magnetic pole structure in the inner layer is greater than or equal to 2mm, and less than or equal to 6mm; the width W2 of the permanent magnet recess section 148 of the second mounting recess 134 of the V-type magnetic pole structure in the outer layer of the motor is greater than or equal to 1mm, and less than or equal to 5mm. The first magnetic pole angle $\theta$3 of the V-type magnetic pole structure in the inner layer of the motor is greater than or equal to 80°, and less than or equal to 130°. The second magnetic pole angle $\theta$4 the V-type magnetic pole structure in the outer layer of the motor is greater than or equal to 90°, and less than or equal to 150°.

The outer peripheral wall of the rotor is provided with the first auxiliary recesses 136, and the first auxiliary recesses 136 are arranged corresponding to the second mounting recesses 134. The depth of the first auxiliary recess 136 is 0.8mm.

One second auxiliary recess 138 is provided between every pair of magnetic poles on the outer peripheral wall of the rotor, the second auxiliary recess 138 is symmetrically arranged about the geometric centerline of the motor, and the depth of the second auxiliary recess 138 is 0.7mm.

Based on Table 1, Table 2 and Table 3, it can be seen that compared with an entire circle design of the rotor, the present application reduces the distortion rate of the air gap magnetic density waveform of the motor without changing the average air gap length of the motor while ensuring that the output torque of the motor remains unchanged, and significantly weakens the torque ripple of the main order of the motor and the radial electromagnetic force density of the motor, and can effectively improve the torque performance and vibration noise performance of the motor.

In addition, when the V-type symmetrical distribution of six rotor cores 200 as shown in Figure 6 is adopted, the maximum value $\beta$ of the plurality of relative rotation angles satisfies $\dfrac{0.5 \times 360° \times (N-1)}{N \times Z} \leq \beta \leq \dfrac{1.1 \times 360° \times (N-1)}{N \times Z}$ , and the maximum value $\beta$ is greater than or equal to 3.125°, and less than or equal to 6.875°.

FIG. 7 shows the variation curves of the torque ripple rate and maximum no-load line back-electromotive force amplitude of the motor which vary with the oblique pole angle $\beta$; when $\beta$ varies within the above range, corresponding to the value of any $\beta$, it can be seen that the electromagnetic torque and torque ripple rate of the motor are at the optimal level at the moment.

Table 1

| Electromagnetic Parameters | Traditional Entire Circle Design | Solution of the Present Application |
|---|---|---|
| Equivalent Air Gap Length (mm) | 0.75 | 0.75 |
| Distortion Rate of Magnetic Density Waveform (%) | 26.6 | 16.7 |
| Average Electromagnetic Torque (Nm) | 276.6 | 276.0 |
| 0-order 6f Radial Electromagnetic Force Density (N/mm^2) | 12000 | 7800 |
| 0-order 12f Radial Electromagnetic Force Density (N/mm^2) | 8154 | 5756 |

Table 2

| Torque Ripple Rate % | Traditional Entire Circle Design | Solution of the Present Application |
|---|---|---|
| 100%Tmax | 8.7% | 4.6% |
| 60%Tmax | 6.3% | 3.1% |
| 40%Tmax | 5.4% | 2.6% |
| 30%Tmax | 7.8% | 3.6% |
| 15%Tmax | 9.2% | 4.1% |

Table 3

| Ratio of Torque Ripple /% | 24-order | | 48-order | |
|---|---|---|---|---|
| | Traditional Entire Circle Design | Solution of the Present Application | Traditional Entire Circle Design | Solution of the Present Application |
| 100%Tmax | 2.50% | 1.37% | 3.1% | 1.36% |
| 60%Tmax | 1.27% | 0.45% | 1.12% | 0.26% |
| 40%Tmax | 1.64% | 0.27% | 1.07% | 0.07% |
| 30%Tmax | 2.30% | 0.35% | 1.70% | 0.16% |
| 15%Tmax | 3.88% | 1.27% | 0.91% | 0.27% |

In the present application, the phrase of "a plurality of" indicates two or more than two, unless otherwise explicitly defined; the terms of "mounting", "connected with", "connected to", "fixing" and the like should be understood in a broad sense, for example, the term "connected to" may be a fixed connection, and may also be a detachable connection, or an integral connection; and the term "connected with" may be a direct connection and may also be an indirect connection through an intermediate medium. A person of ordinary skills in the art could understand the specific meanings of the terms in the present application according to specific situations.

In the description of the present specification, the descriptions of the phrases "one embodiment", "some embodiments" and "specific embodiments" and the like mean that the specific features, structures, materials or characteristics described in combination with the embodiment(s) or example(s) are included in at least one embodiment or example of the present application. In the specification, the schematic representation of the above phrases does not necessarily refer to the same embodiment or example. Moreover, the particular features, structures, materials or characteristics described may be combined in a suitable manner in any one or more of the embodiments or examples.

The descriptions above are only some embodiments of the present application, and are not used to limit the present application. For a person skilled in the art, the present application may have various changes and variations. Any modifications, equivalent substitutions, improvements, etc. made within the spirit and principle of the present application shall all be included in the protection scope of the present application.

**Claims**

1.   A rotor punching sheet, comprising:

> a punching sheet main body;
> a shaft hole, provided in the punching sheet main body; and
> a plurality of recess groups, provided in the punching sheet main body and separately distributed around the shaft hole,
> wherein:

>> each recess group comprises a plurality of mounting recesses, a plurality of first auxiliary recesses and a second auxiliary recess;
>> each mounting recess comprises two recess bodies;
>> each recess body comprises a permanent magnet recess section;
>> an end portion of each permanent magnet recess section away from the shaft hole is a matching portion;
>> the plurality of mounting recesses are separately arranged in a radial direction of the punching sheet main body;
>> the mounting recesses in the plurality of mounting recesses closest to the shaft hole are first mounting recesses;
>> the mounting recesses in the plurality of mounting recesses closest to an outer peripheral wall of the punching sheet main body are second mounting recesses;
>> the plurality of first auxiliary recesses and the second auxiliary recess are all arranged on the outer peripheral wall of the punching sheet main body;
>> the first auxiliary recesses and the second mounting recesses are correspondingly arranged;
>> the portion of the punching sheet main body between two adjacent first mounting recesses and the second auxiliary recess are correspondingly arranged;

connecting lines between the matching portions of the two recess bodies of the first mounting recess and the center of the shaft hole form a first polar arc angle $\theta 1$;

connecting lines between the matching portions of the two recess bodies of the second mounting recess and the center of the shaft hole form a second polar arc angle $\theta 2$;

the plurality of first auxiliary recesses are arranged separately along the circumferential direction of the punching sheet main body;

an included angle between connecting lines between the centers of the first auxiliary recesses in the plurality of first auxiliary recesses at the two end portions in the circumferential direction of the punching sheet main body and the center of the shaft hole is $\alpha 1$, the number of pole pairs of a motor is *p*, wherein,

$$\frac{0.1 \times 360^\circ}{2 \times p} \leq \alpha 1 \leq 0.9 \times \theta 2$$ ; and

an included angle between the connecting lines between the two end portions of the second auxiliary recess in the circumferential direction of the punching sheet main body and the center of the shaft hole is $\alpha 2$, wherein,

$$0^\circ \leq \alpha 2 \leq 0.75 \times \left( \frac{360^\circ}{2 \times p} - \theta 1 \right)$$ .

2. The rotor punching sheet according to claim 1, wherein the plurality of first auxiliary recesses are symmetrically arranged along a centerline of a magnetic pole where they are located.

3. The rotor punching sheet according to claim 1 or claim 2, wherein the second auxiliary recesses are symmetrically arranged along the bisector of the magnetic pole.

4. The rotor punching sheet according to any one of claims 1 to 3, wherein:

   the number of the first auxiliary recesses is 2*p*; and
   the number of the second auxiliary recesses is *p*.

5. The rotor punching sheet according to any one of claims 1 to 4, wherein:

   a recess depth of the first auxiliary recess is greater than or equal to 0.2mm and less than or equal to 1.2mm; and
   a recess depth of the second auxiliary recess is greater than or equal to 0.2mm and less than or equal to 1.2mm.

6. The rotor punching sheet according to any one of claims 1 to 5, wherein:

   each recess body further comprises a first end portion and a second end portion;
   the permanent magnet recess section is connected between the first end portion and the second end portion;
   first end portions of the two recess bodies of each mounting recess are arranged adjacent to each other;
   second end portions of the two recess bodies of each mounting recess are arranged away from each other;
   a width of the permanent magnet recess section of the first mounting recess is W1;
   a width of the permanent magnet recess section of the second mounting recess is W2;

   wherein, $10^\circ < \theta 1 - \theta 2 < 22.5^\circ$, and $$1.1 \leq \frac{W1}{W2} \leq 2.5$$ .

7. The rotor punching sheet according to claim 6, wherein:

   the first polar arc angle $\theta 1$ and the number *p* of the pole pairs of the motor satisfy $0.5 \times \frac{360^\circ}{2 \times p} \leq \theta 1 \leq 0.85 \times \frac{360^\circ}{2 \times p}$;

   the second polar arc angle $\theta 2$ and the number *p* of the pole pairs of the motor satisfy $0.2 \times \frac{360^\circ}{2 \times p} \leq \theta 2 \leq 0.5 \times \frac{360^\circ}{2 \times p}$;

   the width W1 of the permanent magnet recess section of the first mounting recess is greater than or equal to 2mm, and less than or equal to 6mm; and
   the width W2 of the permanent magnet recess section of the second mounting recess is greater than or equal to 1mm, and less than or equal to 5mm.

8. The rotor punching sheet according to claim 6 or claim 7, wherein the first end portion of the recess body is closer to the shaft hole than the second end portion.

9. The rotor punching sheet according to any one of claims 6 to 8, wherein:

the two permanent magnet recess sections of the first mounting recess and the two permanent magnet recess sections of the second mounting recess respectively comprise first end surfaces and second end surfaces in the radial direction of the punching sheet main body;
the first end surfaces are closer to the shaft hole than the second end surfaces;
a first magnetic pole angle $\theta3$ is formed between the two second end surfaces of the first mounting recess; and
a second magnetic pole angle $\theta4$ is formed between the two second end surfaces of the second mounting recess, wherein, $0° \leq \theta4-\theta3 \leq 60°$.

10. The rotor punching sheet according to claim 9, wherein:

the first magnetic pole angle $\theta3$ is greater than or equal to 80°, and less than or equal to 130°; and
the second magnetic pole angle $\theta4$ is greater than or equal to 90°, and less than or equal to 150°.

11. The rotor punching sheet according to any one of claims 6 to 10, wherein:

along the circumferential direction of the shaft hole, both of the two ends of the second mounting recess comprise magnetic isolation holes;
a magnetic isolation bridge is formed between the magnetic isolation holes and the outer peripheral wall of the punching sheet main body;
along a first direction, the minimum distance between the first auxiliary recess and an adjacent magnetic isolation bridge is $d$; and
the minimum distance between two magnetic isolation bridges at the end portions of the two ends of the second mounting recess is D, wherein, $d \leq k \times D$, $k \in [0.05,0.45]$, and $d$ is greater than or equal to thickness of the punching sheet main body.

12. The rotor punching sheet according to any one of claims 1 to 11, wherein:

along an axial direction perpendicular to the shaft hole, the punching sheet main body is sectioned; and
in the cross section, a contour line of any of the first auxiliary recess and the second auxiliary recess comprises any one or the combination of an arc, a wave form line and a folding line.

13. The rotor punching sheet according to claim 12, wherein:
when the contour line of any of the first auxiliary recess and the second auxiliary recess comprises an arc, radius of the arc of the first auxiliary recess is R1, radius of the arc of the second auxiliary recess is R2, wherein, $0.35 \leq R1/R2 \leq 7.5$.

14. A rotor core, comprising:

a plurality of the rotor punching sheets of any one of claim 1 to claim 13,
wherein:

the plurality of rotor punching sheets are stacked; and
the recess bodies of the plurality of rotor punching sheets are communicated along the axial direction of the punching sheet main body to form a plurality of inserting slots.

15. A rotor, for a motor, comprising:

the rotor core according to claim 14; and
a plurality of permanent magnets, wherein each inserting slot is arranged with a permanent magnet.

16. The rotor according to claim 15, wherein:

there are a plurality of rotor cores;
the plurality of rotor cores are stacked along the axial direction of the shaft hole;

there is a relative rotation angle between any two rotor cores;
the plurality of rotor cores comprise a plurality of the relative rotation angles; and
the maximum value β of the plurality of relative rotation angles satisfies

$$\frac{0.5\times360°\times(N-1)}{N\times Z} \leq \beta \leq \frac{1.1\times360°\times(N-1)}{N\times Z}$$ , wherein N is the number of the rotor cores, and Z is the number of stator recesses of the motor.

17. A motor, comprising:
the rotor of claim 15 or claim 16.

18. A vehicle, comprising:
the motor according to claim 17.

FIG.1

FIG. 2

FIG. 3

FIG. 4

FIG. 5

FIG. 6

FIG. 7

## INTERNATIONAL SEARCH REPORT

| | International application No. |
|---|---|
| | **PCT/CN2023/098662** |

**A. CLASSIFICATION OF SUBJECT MATTER**

H02K1/278(2022.01)i; H02K1/28(2006.01)i

According to International Patent Classification (IPC) or to both national classification and IPC

**B. FIELDS SEARCHED**

Minimum documentation searched (classification system followed by classification symbols)

IPC:H02K

Documentation searched other than minimum documentation to the extent that such documents are included in the fields searched

Electronic data base consulted during the international search (name of data base and, where practicable, search terms used)

CNABS, CNTXT, VEN, WOTXT, EPTXT, USTXT, CNKI, IEEE: 转子, 冲片, 安装槽, 第一, 第二, 辅助槽, 极弧角, 夹角, 圆心角, 极对数, rotor, punch, mounting slot, first, second, auxiliary slot, pole arc angle, included angle, center angle, pole pair number

**C. DOCUMENTS CONSIDERED TO BE RELEVANT**

| Category* | Citation of document, with indication, where appropriate, of the relevant passages | Relevant to claim No. |
|---|---|---|
| PX | CN 218498900 U (ANHUI WELLING AUTO PARTS CO., LTD. et al.) 17 February 2023 (2023-02-17)<br>claims 1-18 | 1-18 |
| A | CN 215498476 U (HANGZHOU VOLT POWER TECHNOLOGY CO., LTD.) 11 January 2022 (2022-01-11)<br>description, paragraphs 0004-0099, and figures 1-5 | 1-18 |
| A | CN 112234735 A (ZHUHAI GREE ELECTRIC APPLIANCES INC.) 15 January 2021 (2021-01-15)<br>entire document | 1-18 |
| A | CN 212726607 U (ANHUI WELLING AUTO PARTS CO., LTD. et al.) 16 March 2021 (2021-03-16)<br>entire document | 1-18 |
| A | CN 214124968 U (BYD CO., LTD. et al.) 03 September 2021 (2021-09-03)<br>entire document | 1-18 |

☑ Further documents are listed in the continuation of Box C.  ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 July 2023** | **21 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/098662**

**C.    DOCUMENTS CONSIDERED TO BE RELEVANT**

| Category* | Citation of document, with indication, where appropriate, of the relevant passages | Relevant to claim No. |
|---|---|---|
| A | US 2020381965 A1 (GREE GREEN REFRIGERATION TECHNOLOGY CENTER CO., LTD. ZHUHAI) 03 December 2020 (2020-12-03)<br>    entire document | 1-18 |

**INTERNATIONAL SEARCH REPORT**
Information on patent family members

International application No.

**PCT/CN2023/098662**

| Patent document cited in search report | | | Publication date (day/month/year) | Patent family member(s) | | | Publication date (day/month/year) |
|---|---|---|---|---|---|---|---|
| CN | 218498900 | U | 17 February 2023 | None | | | |
| CN | 215498476 | U | 11 January 2022 | None | | | |
| CN | 112234735 | A | 15 January 2021 | CN | 213367500 | U | 04 June 2021 |
| CN | 212726607 | U | 16 March 2021 | CN | 212726608 | U | 16 March 2021 |
| | | | | CN | 114069918 | A | 18 February 2022 |
| | | | | CN | 114069919 | A | 18 February 2022 |
| | | | | WO | 2022022426 | A1 | 03 February 2022 |
| CN | 214124968 | U | 03 September 2021 | None | | | |
| US | 2020381965 | A1 | 03 December 2020 | WO | 2019029109 | A1 | 14 February 2019 |
| | | | | WO | 2019029109 | A9 | 14 November 2019 |
| | | | | EP | 3667869 | A1 | 17 June 2020 |
| | | | | EP | 3667869 | A4 | 29 July 2020 |
| | | | | EP | 3667869 | B1 | 24 November 2021 |
| | | | | US | 11387695 | B2 | 12 July 2022 |
| | | | | DK | 3667869 | T3 | 20 December 2021 |
| | | | | CN | 107222047 | A | 29 September 2017 |
| | | | | CN | 207234637 | U | 13 April 2018 |

Form PCT/ISA/210 (patent family annex) (July 2022)

**REFERENCES CITED IN THE DESCRIPTION**

**Patent documents cited in the description**

- CN 202210878269

- CN 202221923822